# FASCICULE DE BREVET EUROPEEN

(11) **EP 4 032 000 B1**
(45) Date de publication et mention de la délivrance du brevet: **06.08.2025**
(21) Numéro de dépôt: 20768367.3
(22) Date de dépôt: 15.09.2020
(51) Int. Cl.: G06F 21/57, G06F 11/14, G06F 12/02, G06F 21/64, G06F 21/71

(54) **SYSTÈME SUR PUCE ET PROCÉDÉ GARANTISSANT LA FRAICHEUR DES DONNÉES STOCKÉES DANS UNE MÉMOIRE EXTÉRIEURE**
SYSTEM-ON-CHIP UND VERFAHREN WELCHES DIE FRISCHE VON IN EINEM EXTERNEN SPEICHER GESPEICHERTEN DATEN GEWÄHRLEISTET
SYSTEM ON CHIP AND METHOD ENSURING FRESHNESS OF DATA STORED IN EXTERNAL MEMORY

(30) Priorité: 16.09.2019 FR 1910201
(43) Date de publication de la demande: 27.07.2022
(73) Titulaire: IDEMIA France, 92400 Courbevoie (FR)
(72) Inventeur: DEL GIUDICE, Lauren, 92400 COURBEVOIE (FR); DUCLOS, Rémi, 92400 COURBEVOIE (FR)
(74) Mandataire: Idemia
(86) Numéro de dépôt international: PCT/EP2020/075735
(87) Numéro de publication internationale: WO 2021/052946

(56) Documents cités:
- US-A1- 2017 124 353
- US-A1- 2019 278 914
- ESEGURA: "How do you avoid adding timestamp fields to your tables? [closed]", 6 October 2008 (2008-10-06), XP055709327, Retrieved from the Internet <URL:https://stackoverflow.com/questions/154964/how-do-you-avoid-adding-timestamp-fields-to-your-tables> [retrieved on 20200626]

## Description

### Domaine technique

L'invention est dans le domaine de la sécurité, notamment des systèmes sur puce à élément sécurisé dont une partie des données est stockée dans une mémoire extérieure au système sur puce. L'invention concerne, en particulier, un système sur puce et des procédés garantissant la fraicheur des données stockées dans cette mémoire extérieure.

### Etat de la technique

Dans les systèmes sur puce ou SOC (pour *System On Chip* en terminologie anglo-saxonne) comprenant un élément intégré sécurisé, les données manipulées par le système d'exploitation sécurisé sont généralement stockées dans une mémoire extérieure au système sur puce, et ce pour des raisons de coûts.

Ainsi, par exemple, l'élément sécurisé comprend une unité de traitement, une mémoire volatile ainsi qu'une mémoire non volatile de petite taille, présentant typiquement une faible endurance, telle qu'une mémoire OTP (pour *One Time Programmable* en terminologie anglo-saxonne) ou MTP (pour *Multi Time Programmable* en terminologie anglo-saxonne), tandis que la mémoire extérieure est typiquement une mémoire non volatile réinscriptible présentant une bien meilleure endurance. Il s'agit par exemple d'une mémoire Flash.

Une difficulté est que la mémoire extérieure à l'élément sécurisé et au SOC peut être partagée avec d'autres applications que celles de l'élément sécurisé ou du SOC. De plus, elle peut être manipulée indépendamment de l'élément sécurisé ou du SOC qui ne peut donc pas contrôler l'utilisation des données qu'elle contient.

Par exemple, les données de la mémoire extérieure peuvent être récupérées afin d'être réutilisées ultérieurement à des fins frauduleuses. Une telle attaque consistant à modifier la valeur courante d'une donnée en réutilisant une ancienne valeur est connue sous le nom d'attaque par *rollback.* Elle est d'autant plus difficile à détecter en l'absence d'une connexion permettant de vérifier à partir d'un serveur distant, la 'fraicheur' de la valeur utilisée, comme par exemple décrit dans le document US 2017/0124353 A1.

Le document Esegura: "How do you avoid adding timestamp fields to your tables? [closed]", 6 octobre 2008, XP055709327, divulgue l'adjonction à un tableau de banque de données d'un tableau comportant des informations d'horodatage associées à ces données.

A titre d'illustration, une telle attaque peut permettre à un utilisateur d'avoir accès à un service payant après la fin de son abonnement. Une autre illustration de ce type d'attaque peut permettre à un utilisateur de remettre son porte-monnaie électronique à son maximum après l'avoir vidé.

Il existe donc un besoin pour un moyen local, c'est-à-dire ne nécessitant pas la connexion à un serveur distant, de vérifier la fraicheur des données d'une telle mémoire extérieure au SOC, afin d'éviter notamment les attaques par *rollback.*

### Exposé de l'invention

La présente invention a ainsi pour objet de pallier au moins un de ces inconvénients.

Dans ce contexte, un premier aspect de l'invention concerne un système sur puce comprenant un élément sécurisé comprenant une unité de traitement configurée pour exécuter un système d'exploitation sécurisé et pour envoyer des instructions à une mémoire non volatile réinscriptible extérieure au système sur puce et relié à celui-ci, l'élément sécurisé comprenant en outre une mémoire non volatile sécurisée ainsi qu'une mémoire volatile sécurisée, le système sur puce étant caractérisé en ce que l'unité de traitement est configurée pour commander :
- le stockage, dans la mémoire non volatile réinscriptible extérieure d'au moins un objet ayant une version courante, et d'un répertoire dédié associant un identifiant de chaque objet à un identifiant de la version courante de cet objet, le répertoire dédié comprenant en outre un identifiant de sa propre version courante ; et
- le stockage, dans la mémoire non volatile de l'élément sécurisé, de l'identifiant de la version courante du répertoire dédié.

Corrélativement, un deuxième aspect de l'invention concerne un procédé d'écriture sécurisée d'un objet dans une mémoire non volatile réinscriptible extérieure à un système sur puce et reliée à celui-ci, le système sur puce comprenant un élément sécurisé comprenant une unité de traitement configurée pour exécuter un système d'exploitation sécurisé et pour envoyer des instructions à la mémoire non volatile réinscriptible extérieure, l'élément sécurisé comprenant en outre une mémoire non volatile sécurisée ainsi qu'une mémoire volatile sécurisée, le procédé étant caractérisé en ce qu'il comprend les étapes suivantes :
- commande de l'écriture d'un identifiant de la version courante de l'objet dans un répertoire dédié stocké dans la mémoire non volatile réinscriptible extérieure, en association avec un identifiant de l'objet,
- commande de la mise à jour d'un identifiant de la version courante du répertoire dédié dans le répertoire dédié stocké dans la mémoire non volatile réinscriptible extérieure,
- commande de l'écriture de l'identifiant de la version courante du répertoire dédié dans la mémoire non volatile sécurisée de l'élément sécurisé.

L'invention ainsi revendiquée permet de s'assurer de la « fraicheur » des données stockées dans la mémoire extérieure au SOC et reliée à lui, c'est-à-dire de s'assurer que ces données correspondent bien à la version attendue à l'instant considéré.

En effet, en attachant une version courante à chaque objet, et en consignant un identifiant de cette version dans un répertoire dédié ayant lui aussi une version dont un identifiant est consigné dans la mémoire non volatile sécurisée de l'élément sécurisé, une attaque consistant à remplacer les données de l'objet dans la mémoire externe par une ancienne version serait immédiatement détectée.

La sécurité générale du système sur puce est donc améliorée, sans que cela nécessite de modification matérielle du système sur puce. Le bénéfice de l'utilisation d'une mémoire extérieure ayant une meilleure endurance que la mémoire non volatile de l'élément sécurisé est donc conservé.

De plus, le système de réplication de version utilisé dans l'invention revendiquée permet de différencier un objet non à jour en raison d'une simple coupure d'alimentation (appelée *« tearing »* en terminologie anglo-saxonne) pendant l'écriture (la mise à jour) de ses données par rapport à une attaque visant à écrire d'anciennes données.

D'autres caractéristiques du système sur puce et du procédé selon des modes de réalisation de l'invention sont décrites dans les revendications dépendantes.

Dans des modes de réalisation, l'unité de traitement est configurée pour commander l'écriture, dans une zone de type « *rollforward »* dans la mémoire non volatile réinscriptible extérieure, de données à utiliser pour mettre à jour un objet.

Dans des modes de réalisation, l'unité de traitement est configurée pour commander la création d'une copie d'au moins une partie du contenu de la mémoire non volatile réinscriptible extérieure dans la mémoire volatile sécurisée de l'élément sécurisé.

Dans des modes de réalisation, l'unité de traitement est configurée pour commander la modification de ladite copie dans la mémoire volatile sécurisée de l'élément sécurisé avant la modification de la mémoire non volatile réinscriptible extérieure.

Dans des modes de réalisation, l'unité de traitement est configurée pour commander:
- la reproduction des modifications effectuées sur la copie du répertoire dédié et de la zone de type « *rollforward »* en mémoire volatile sécurisée sur le répertoire dédié et la zone de type « *rollforward* » stockés dans la mémoire non volatile réinscriptible extérieure, puis
- la modification du ou des objets concernés stockés dans la mémoire non volatile réinscriptible extérieure conformément au contenu de la zone de type « *rollforward »* et du répertoire dédié.

Dans des modes de réalisation, l'unité de traitement est configurée pour commander la mise à jour de l'identifiant de la version courante du répertoire dédié dans la mémoire non volatile sécurisée de l'élément sécurisé avant la modification du ou des objets concernés stockés dans la mémoire non volatile réinscriptible extérieure conformément au contenu de la zone de type « *rollforward »* et du répertoire dédié.

Dans des modes de réalisation, l'unité de traitement est configurée pour commander la reproduction des modifications en mémoire non volatile réinscriptible extérieure, après que plusieurs copies d'objets aient été modifiées dans la mémoire volatile sécurisée de l'élément sécurisé.

Dans des modes de réalisation, la mémoire non volatile sécurisée de l'élément sécurisé est une mémoire à durée de vie limitée de type OTP ou MTP.

Dans des modes de réalisation, l'identifiant de la version courante d'un objet et/ou l'identifiant de la version courante du répertoire dédié est un numéro de version.

Dans des modes de réalisation, l'identifiant de la version courante d'un objet et/ou l'identifiant de la version courante du répertoire dédié est une somme de contrôle *(checksum* en terminologie anglo-saxonne) calculée à partir de l'objet et/ou du répertoire dédié, identifiant de manière unique sa version.

Dans des modes de réalisation, l'identifiant de la version courante d'un objet et/ou l'identifiant de la version courante du répertoire dédié est une signature de l'objet et/ou du répertoire dédié identifiant de manière unique sa version.

Dans des modes de réalisation, l'unité de traitement met en œuvre une première fonction de comparaison et une deuxième fonction de comparaison afin de déterminer si un identifiant de version correspond à une version courante ou à une ancienne version, la première fonction consistant à déterminer si les valeurs sont identiques, la seconde fonction consistant à déterminer si ladite version est strictement supérieure ou strictement inférieure à la version courante.

Par exemple, la première fonction consiste à déterminer si les valeurs de la version de la copie du répertoire en mémoire volatile sécurisée et celle de la version courante du répertoire consignée dans la mémoire non volatile sécurisée OTP/MTP de l'élément sécurisé sont identiques. La seconde fonction consiste à déterminer si la version de la copie du répertoire en mémoire volatile sécurisée est strictement supérieure ou strictement inférieure à la version courante du répertoire consignée dans la mémoire non volatile sécurisée OTP/MTP de l'élément sécurisé.

Dans des modes de réalisation, l'unité de traitement est configurée pour fonctionner tantôt selon un mode d'exécution non sécurisé tantôt selon un mode d'exécution sécurisé.

Dans des modes de réalisation, l'unité de traitement est configurée pour commander un contrôleur de mémoire contrôlant la mémoire non volatile réinscriptible extérieure. Ce contrôleur peut être sur le SOC ou à l'extérieur de celui-ci.

Dans des modes de réalisation, le procédé comprend une étape de vérification de la fraicheur d'un objet stocké dans la mémoire non volatile réinscriptible extérieure, comprenant :
- la création d'une copie du répertoire dédié et de l'objet dans la mémoire volatile sécurisée de l'élément sécurisé,
- la comparaison de l'identifiant de la version courante du répertoire dédié stocké dans la copie (en mémoire volatile sécurisée) du répertoire dédiée, avec l'identifiant de la version courante du répertoire dédié stocké dans la mémoire non volatile sécurisée de l'élément sécurisé ;
- en cas d'égalité, la comparaison de l'identifiant de la version courante de la copie (en mémoire volatile sécurisée) de l'objet avec l'identifiant de la version de cet objet stocké dans la copie (en mémoire volatile sécurisée) du répertoire dédié, afin de vérifier la fraicheur de l'objet.

Dans des modes de réalisation, en cas d'égalité de version entre l'identifiant de la version courante du répertoire dédié stocké dans la copie (en mémoire volatile sécurisée) du répertoire dédiée et l'identifiant de la version courante du répertoire dédié stocké dans la mémoire non volatile sécurisée de l'élément sécurisé, mais de différence entre les versions de l'objet indiquées dans l'objet lui-même et dans le répertoire dédié, le procédé comprend une étape de mise à jour de la version et/ou du contenu dudit objet.

Dans des modes de réalisation, ce procédé est mis en œuvre au démarrage de l'unité de traitement de l'élément sécurisé.

Dans des modes de réalisation, le procédé comprend en outre une étape d'écriture, dans une zone de type « *rollforward »* dans la mémoire non volatile réinscriptible extérieure, de données à utiliser pour mettre à jour un objet.

Dans des modes de réalisation, l'unité de traitement met en œuvre une première fonction de comparaison et une deuxième fonction de comparaison afin de déterminer si un identifiant de version correspond à une version courante ou à une ancienne version, la première fonction consistant à déterminer si les valeurs sont identiques, la seconde fonction consistant à déterminer si ladite version est strictement supérieure ou strictement inférieure à la version courante.

Par exemple, la première fonction consiste à déterminer si les valeurs de la version de la copie du répertoire en mémoire volatile sécurisée et celle de la version courante du répertoire consignée dans la mémoire non volatile sécurisée OTP/MTP de l'élément sécurisé sont identiques. La seconde fonction consiste à déterminer si la version de la copie du répertoire en mémoire volatile sécurisée est strictement supérieure ou strictement inférieure à la version courante du répertoire consignée dans la mémoire non volatile sécurisée OTP/MTP de l'élément sécurisé.

Les avantages, buts et caractéristiques particulières des procédés sont similaires à ceux du système sur puce qui les met en œuvre.

Dans un mode particulier de réalisation, les différentes étapes des procédés précités sont déterminées par des instructions de programmes d'ordinateur.

En conséquence, l'invention vise aussi des programmes d'ordinateur sur un support d'information, ces programmes étant susceptibles d'être mis en œuvre par un microprocesseur, ces programmes comprenant des instructions adaptées à la mise en œuvre des étapes des procédés tels que mentionnés ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un microprocesseur, et comprenant des instructions de programmes d'ordinateur tels que mentionnés ci-dessus.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'information peut être un circuit intégré dans lequel le programme est incorporé, le circuit étant adapté pour exécuter ou pour être utilisé dans l'exécution du procédé en question.

Le support d'information et les programmes d'ordinateur précités présentent des caractéristiques et avantages analogues aux procédés qu'ils mettent en œuvre.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[Fig. 1] La figure 1 représente un exemple d'architecture pour un système sur puce conforme à des modes de réalisation de l'invention.
[Fig. 2] La figure 2 représente, sous forme d'organigramme, des étapes mises en œuvre par le système sur puce pour vérifier la fraicheur d'un objet conformément à des modes de réalisation de l'invention.
[Fig. 3] La figure 3 qui comprend les figures 3A, 3B, 3C, 3D et 3E, illustre schématiquement l'état successif des différentes mémoires considérées lors d'une mise en œuvre des étapes de la figure 2.
[Fig. 4] La figure 4 représente, sous forme d'organigramme, des étapes mises en œuvre par le système sur puce lors d'une écriture sécurisée conforme à des modes de réalisation de l'invention.
[Fig. 5] La figure 5 qui comprend les figures 5A à 5M, illustre schématiquement l'état successif des différentes mémoires considérées lors de la mise en œuvre des étapes de la figure 4.
Par la suite, les mêmes références sont utilisées pour désigner les mêmes éléments lorsqu'ils apparaissent dans différentes figures.

### Description détaillée

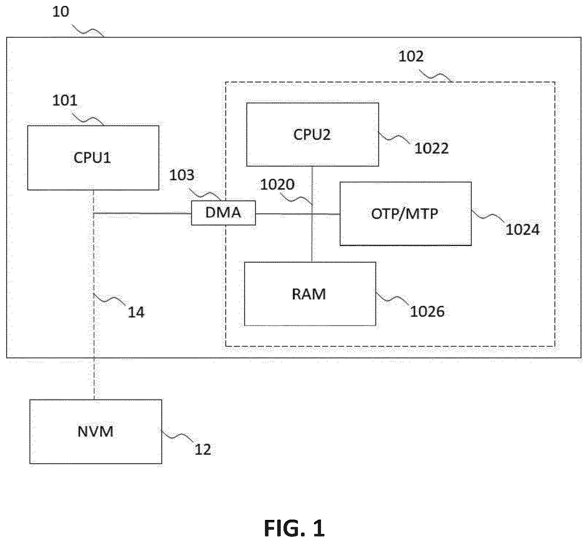

**La** **figure 1** représente un exemple d'architecture pour un système sur puce ('SOC' ci-après) conforme à des modes de réalisation de l'invention.

Selon des modes de réalisation, le SOC 10 est configuré pour être relié à une mémoire non volatile réinscriptible NVM externe 12. Par la suite, le mot 'relié' signifie 'connecté localement' par opposition à une connexion à distance avec un serveur. Cette connexion locale est typiquement mise en œuvre à l'aide d'un bus 14.

La mémoire non volatile réinscriptible NVM 12 est typiquement une mémoire Flash, ou toute autre mémoire ayant une bonne endurance. Cette mémoire peut constituer un support au sens de l'invention, c'est-à-dire pouvant comprendre un programme informatique comprenant des instructions pour la mise en œuvre d'un procédé selon l'invention. Le programme est alors chargé en mémoire RAM 1026 au boot du SOC 10.

Dans cet exemple, le SOC 10 comprend une première unité de traitement ou microprocesseur 101 notée CPU1 (pour *Central Processing Unit* en terminologie anglo-saxonne) et un élément sécurisé 102. La première unité de traitement (CPU1) 101 et l'élément sécurisé 102 communiquent par exemple via une interface de communication 103, par exemple comprenant un module DMA (pour *Direct Memory Access* en terminologie anglo-saxonne) ou une *mailbox* (non représentée).

L'élément sécurisé 102 comprend les éléments suivants, reliés par un bus de communication 1020 :
- une unité de traitement -ou microprocesseur- 1022 notée CPU2 mettant en œuvre un système d'exploitation (OS) sécurisé. Selon des modes de réalisation, cette unité de traitement peut fonctionner en mode sécurisé uniquement ou bien selon plusieurs modes (sécurisé ou non). Selon des modes de réalisation, cette unité de traitement CPU2 est configurée pour envoyer des instructions au CPU1 ou à un contrôleur mémoire (sur le SOC ou relié à celui-ci) contrôlant la mémoire NVM 12 afin d'agir sur cette mémoire 12 ;
- une mémoire non volatile 1024 par exemple OTP ou MTP ;
- une mémoire vive ou mémoire cache ou mémoire volatile 1026 par exemple RAM (acronyme de *Random Access Memory* en terminologie anglo-saxonne) comprenant des registres adaptés à l'enregistrement des variables et paramètres créés et modifiés au cours de l'exécution du programme précité ; lors de la mise en œuvre de l'invention, les codes d'instructions du programme stocké en mémoire non volatile (e.g. NVM) sont chargés en mémoire RAM en vue d'être exécutés par l'unité de traitement CPU2 ; et
- une interface de communication 103 adaptée à transmettre et à recevoir des données, par exemple avec la mémoire non volatile réinscriptible 12 via CPU1.

Le bus de communication permet la communication et l'interopérabilité entre les différents éléments inclus dans l'élément sécurisé ou reliés à lui. La représentation du bus n'est pas limitative et, notamment, l'unité de traitement CPU2 est susceptible de communiquer des instructions à tout élément de l'élément sécurisé directement ou par l'intermédiaire d'un autre élément de cet élément sécurisé.

Il est fait remarquer que dans cet exemple, l'intelligence de l'invention est située au niveau du CPU2 qui transmet ses instructions au CPU1, lequel transfère à la mémoire NVM 12 via le bus 14. En effet, le CPU1 pourrait être un simple contrôleur mémoire.

Selon une variante non représentée, le CPU1 pourrait être remplacé par un contrôleur mémoire extérieur au SOC 10, auquel le CPU2 enverrait directement ses instructions / commandes.

De façon générale, l'OS de CPU2 utilise des objets comme conteneurs de mémoire. De façon connue, un objet est un bloc de bits comprenant un en-tête et des données (charge utile). L'en-tête indique généralement la taille des données tandis que les données intègrent des informations utilisées soit par une application s'exécutant sur l'OS, soit par l'OS lui-même. L'OS peut allouer des objets dynamiquement (pendant l'exécution) ou statiquement (au moment de la construction de l'image du système d'exploitation). Il peut utiliser ces objets pour ses propres besoins, ou pour des applications orientées objet à l'aide d'une machine virtuelle. L'OS accède généralement à l'objet par une adresse ou un identifiant qui redirige vers une adresse.

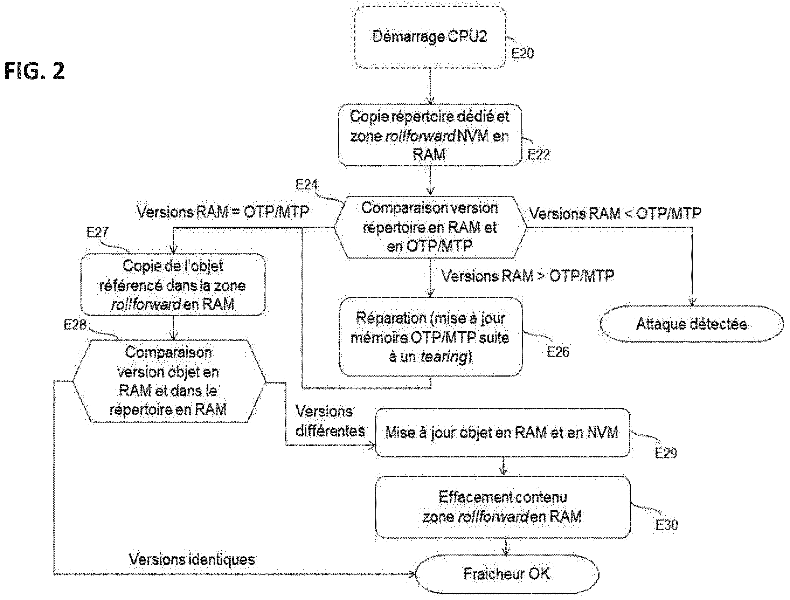

**La** **figure 2** représente, sous forme d'organigramme, des étapes mises en œuvre par le système sur puce pour vérifier la fraicheur d'un objet par exemple lors de sa lecture, conformément à des modes de réalisation de l'invention. Typiquement, les étapes décrites sont mises en œuvre par l'unité de traitement CPU2 1022 de l'élément sécurisé 102.

Au cours d'une étape E20, l'unité de traitement CPU2 1022 de l'élément sécurisé est démarrée (boot en terminologie anglo-saxonne). Il est noté que le SOC et l'unité de traitement CPU2 1022 de l'élément sécurisé ont généralement une alimentation indépendante. Cependant, l'invention n'est pas limitée à cela et dans un mode de réalisation, le SOC et l'élément sécurisé partagent une même alimentation.

Dans cet exemple, la mémoire NVM 12 comprend alors au moins un objet ayant une version courante, ainsi qu'un répertoire dédié associant un identifiant de chaque objet à un identifiant de la version courante de cet objet. Le répertoire dédié comprend en outre un identifiant de sa propre version courante.

Selon les modes de réalisation, l'identifiant de version peut être soit un numéro de version, soit une signature, soit une somme de contrôle *(checksum* en terminologie anglo-saxonne) permettant d'identifier la version de manière unique. Par exemple, la signature peut être calculée sur le numéro de version et les données de l'objet. Par la suite, par souci de simplicité, on considère le numéro de version uniquement. Toutefois, la personne du métier saura transposer les enseignements suivants à une signature ou une somme de contrôle.

La mémoire NVM 12 peut également comprendre une zone de type « *rollforward »* utilisée pour garantir l'atomicité et la sécurité de la mise à jour des données d'un objet. Pour ce faire, la zone *rollforward* comprend les données à utiliser pour mettre à jour un objet donné. Autrement dit, cette zone comprend la dernière version (la plus « fraiche ») des données. Cette zone permet par exemple de restaurer la dernière version des données dans un objet en cas de coupure d'alimentation et d'éviter ainsi la corruption d'un objet.

Dans cet exemple, la mémoire OTP/MTP 1024 stocke également l'identifiant de la version courante du répertoire dédié.

Au cours d'une étape E22, au moins une partie du contenu de la mémoire NVM 12 notamment au moins le répertoire mentionné précédemment ainsi que la zone *rollforward* présente dans la même page mémoire, sont copiés en mémoire RAM 1026 de l'élément sécurisé 102.

Au cours d'une étape E24 a lieu la comparaison de l'identifiant de la version courante du répertoire dédié stocké dans la copie du répertoire dédié (c'est-à-dire en mémoire RAM 1026), avec l'identifiant de la version courante du répertoire dédié stocké dans la mémoire non volatile sécurisée (OTP/MTP 1024) de l'élément sécurisé. Dans l'hypothèse privilégiée où la zone *rollforward* partage la même page mémoire que le répertoire dédié, l'identifiant de la version permet également de vérifier la validité du contenu de la zone *rollforward.* En effet, l'intégrité d'une page mémoire est garantie. Ceci a pour conséquence que la vérification de la version permet de tester la « fraicheur » de tout le contenu de la page mémoire, c'est-à-dire vérifier si le contenu de la page correspond à celui attendu. Dans le cas où la zone *rollforward* n'est pas sur la même page mémoire que le répertoire dédié, le mode de réalisation basé sur des signatures ou des sommes de contrôle *(checksum)* peut être avantageusement privilégié.

S'il est déterminé à l'étape E24 que la version courante de la copie du répertoire en mémoire RAM 1026 est strictement inférieure à la version courante du répertoire indiquée en mémoire non volatile sécurisée (OTP/MTP 1024), cela signifie qu'une attaque par *rollback* a eu lieu.

S'il est déterminé à l'étape E24 que la version courante de la copie du répertoire en mémoire RAM 1026 est strictement supérieure à la version courante du répertoire indiquée en mémoire non volatile sécurisée (OTP/MTP 1024), cela signifie qu'il y a eu une coupure de courant (« *tearing »* en terminologie anglo-saxonne) pendant la mise à jour en mémoire non volatile externe 12. Le procédé se poursuit alors avec une étape E26 dite de 'réparation' de la mémoire non volatile sécurisée (OTP/MTP 1024) visant à mettre à jour la valeur de la version du répertoire en mémoire OTP/MTP afin qu'elle soit identique à celle de la copie du répertoire en mémoire RAM 1026. Suite à cette étape E26 de réparation ou s'il est déterminé à l'étape E24 que la version courante de la copie du répertoire en mémoire RAM 1026 est égale à la version courante du répertoire indiquée en mémoire non volatile sécurisée (OTP/MTP 1024), le procédé se poursuit par une étape E27 durant laquelle un objet référencé dans la copie de la zone *rollforward* en mémoire RAM est à son tour copié de la mémoire NVM 12 dans la mémoire RAM (lecture de l'objet). Par souci de simplicité, on considère par la suite qu'un seul objet est référencé dans la zone *rollforward* mais cet exemple n'est pas limitatif et cette zone pourrait référencer plusieurs objets.

Au cours d'une étape E28, l'identifiant de la version courante de la copie de l'objet en mémoire RAM est comparé avec l'identifiant de la version de cet objet stocké dans la copie du répertoire dédié en mémoire RAM, afin de vérifier la fraicheur de cet objet.

Si les versions concordent, ceci signifie que les données de cet objet sont fraiches, c'est-à-dire ont la valeur attendue.

Si ces versions ne concordent pas, la version de l'objet (si nécessaire) ainsi que son contenu en mémoire RAM 1026 sont mis à jour (étape E29). Le contenu de l'objet en mémoire non volatile externe 12 est également mis à jour. Une fois cette étape de mise à jour terminée, le contenu de la copie de la zone *rollforward* en mémoire RAM 1026 est effacé (étape E30).De préférence, les opérations ci-dessus sont effectuées au démarrage du CPU 2. La copie du répertoire et de la zone *rollforward* seront ensuite maintenues en mémoire RAM 1026 pendant toute la durée de l'exécution.

En pratique, lors de la lecture ultérieure d'un objet, si celui-ci n'est pas déjà en mémoire RAM 1026, l'objet correspondant est copié de la mémoire non volatile externe 12 vers la mémoire RAM 1026. La version de cet objet est comparée à celle de la copie du répertoire en mémoire RAM 1026 afin de vérifier la fraicheur de l'objet, de manière similaire aux étapes E27 et suivantes.

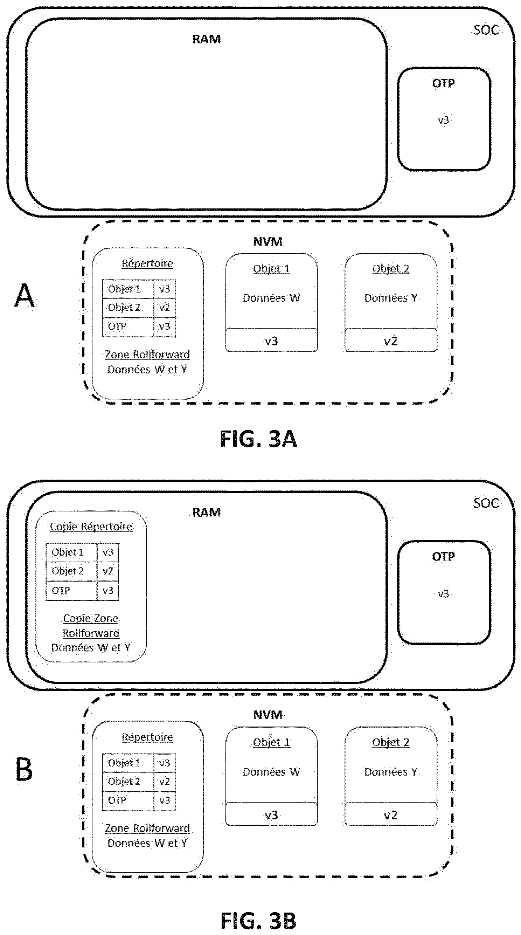

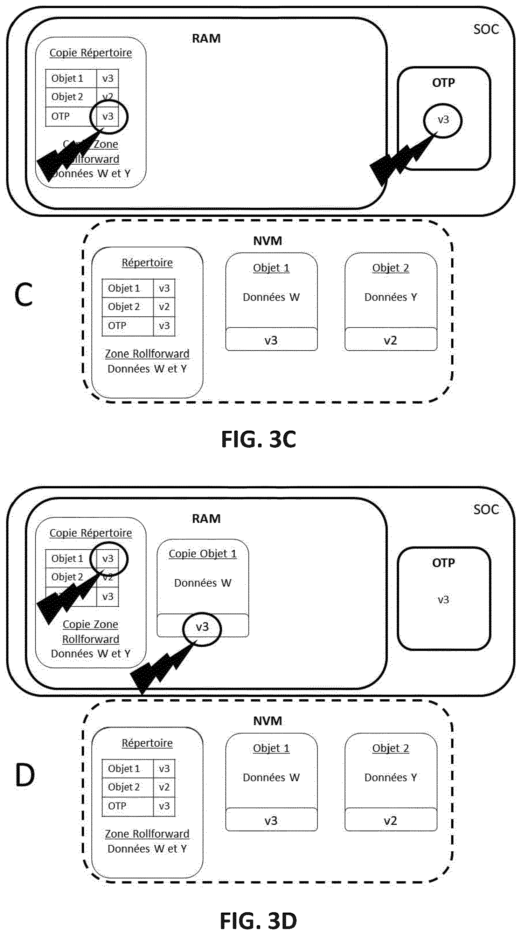

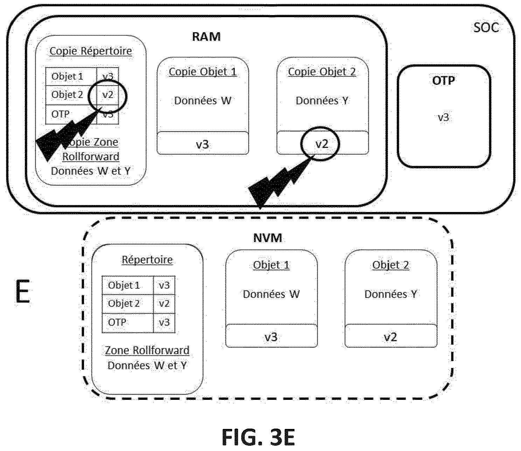

**La** **figure 3** illustre schématiquement l'état successif A, B, C, D, E des différentes mémoires considérées (RAM 1026, OTP/MTP 1024, NVM 12) lors d'une mise en œuvre des étapes de la figure 2, selon un exemple particulier donné à titre d'illustration uniquement.

Dans cet exemple, à l'allumage du CPU2 1022 (état A, étape E20), la mémoire OTP 1024 contient l'identifiant de la version courante du répertoire dédié, ici 'v3'. La mémoire NVM 12 comprend deux objets : Objet 1' et 'Objet 2'. L'objet 1 a une version v3 et contient des données W. L'objet 2 a une version v2 et contient des données Y. La mémoire NVM 12 comprend également un répertoire indiquant la correspondance entre les objets 1 et 2 et leur version respective, ainsi que sa propre version, également stockée dans la mémoire OTP 1024, à savoir 'v3'. La mémoire NVM 12 comprend également une zone *rollforward* qui comprend les données W et Y des objets 1 et 2.

[Fig.3A] Dans cet état A, correspondant au *boot* du CPU 2, la mémoire RAM 1026 est vide.

[Fig.3B] L'état B correspond au résultat de la mise en œuvre de l'étape E22. Ainsi, après copie d'une partie du contenu de la mémoire NVM 12 dans la mémoire RAM 1026, cette mémoire RAM 1026 comprend une copie du répertoire mentionné précédemment ainsi qu'une copie de la zone *rollforward.*

[Fig.3C] L'état C illustre la comparaison des versions du répertoire en mémoire RAM 1026 et OTP 1024 au cours de l'étape E24. Dans cet exemple, les versions concordent.

[Fig.3D] L'état D illustre la copie de l'objet 1 dans la mémoire RAM 1026 au cours de l'étape E27, puis la comparaison des versions de l'objet 1 dans la copie de l'objet 1 et dans la copie du répertoire en mémoire RAM 1026 au cours de l'étape E28. Dans cet exemple, les versions concordent.

[Fig.3E] L'état E illustre la copie de l'objet 2 dans la mémoire RAM 1026 au cours de l'étape E27, puis la comparaison des versions de l'objet 2 dans la copie de l'objet 2 et dans la copie du répertoire en mémoire RAM 1026 au cours de l'étape E28. Dans cet exemple, les versions concordent.

Les objets sont donc conformes à ce qui est attendu en termes de version (fraicheur).

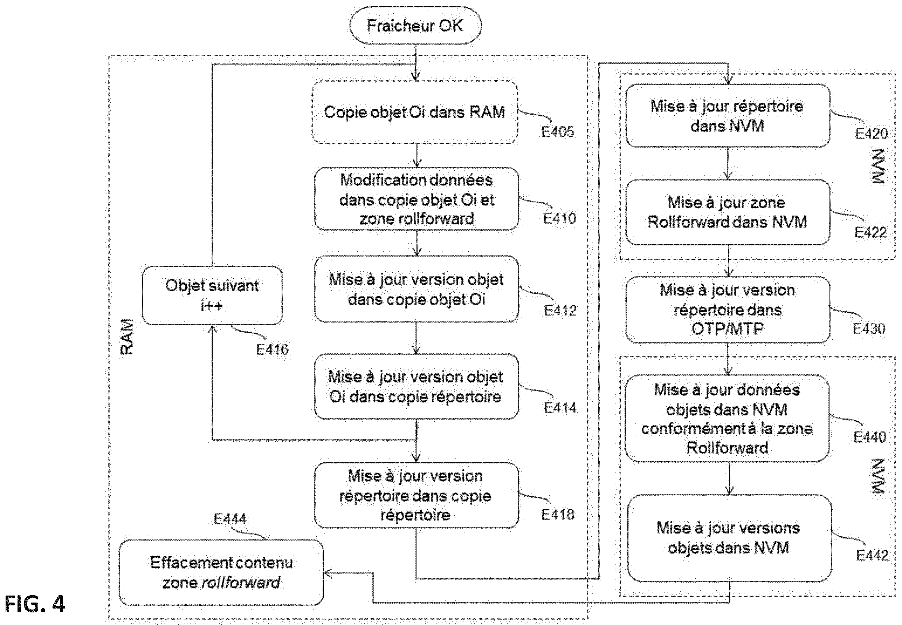

**La** **figure 4** représente, sous forme d'organigramme, des étapes mises en œuvre par le système sur puce lors d'une écriture sécurisée conforme à des modes de réalisation de l'invention.

Le procédé représenté sur la figure 4 démarre après une vérification de la « fraicheur » des données (objets, répertoire) déjà présentes en mémoire NVM 12 à l'allumage du CPU2 1022. Typiquement, cette vérification consiste à mettre en œuvre les étapes décrites en référence à la figure 2.

Dans cet exemple, la mémoire OTP/MTP 1024 stocke une copie de l'identifiant de la version courante du répertoire dédié.

Les objets sont de préférence traités les uns après les autres, c'est-à-dire qu'un seul objet est copié à la fois dans la mémoire RAM, sa version est vérifiée puis le cas échéant, il est mis à jour.

Si le nombre d'objets dont la fraicheur doit être vérifiée est trop important pour qu'une copie de tous les objets puisse être conservée en mémoire RAM, au moins certains objets (qui ne sont pas en cours d'utilisation dans une application) sont supprimés de la mémoire RAM, de façon à permettre la vérification d'autres objets.

Au cours d'une étape 405, si l'objet dans lequel on souhaite écrire n'est pas déjà présent en mémoire RAM, on en effectue une copie en mémoire RAM 1026. On vérifie alors que sa version est bien celle correspondant à son entrée dans la copie du répertoire en mémoire volatile 1026.

Si tel est le cas, les étapes E410 à E418 sont ensuite mises en oeuvre dans la mémoire RAM 1026. Si les versions ne concordent pas, le procédé considère qu'il peut s'agir d'une attaque ou d'un tearing, et s'arrête donc préventivement.

Au cours de l'étape E410, les données de la copie d'un objet Oi sont mises à jour ainsi que dans la zone *rollforward.* Ensuite, la version de l'objet Oi est mise à jour dans la copie de cet objet (étape E412) puis dans la copie du répertoire (étape E414).

Ensuite, les étapes E405 à E414 sont répétées pour chaque objet dans lequel on souhaite écrire (E416). Une fois que la mémoire RAM et/ou la zone *rollforward* est pleine et/ou que tous les objets ont été traités, les modifications effectuées en mémoire RAM vont pouvoir être répercutées dans la mémoire NVM 12 (étapes E420, E422, E440, E442).

Avant cela, la version du répertoire est mise à jour dans la copie du répertoire en mémoire RAM (étape E418).

Le CPU2 1022 ordonne ensuite la mise à jour du répertoire en mémoire NVM 12 (étape E420). Cela consiste par exemple à remplacer (c'est-à-dire effacer puis écrire à la place) le répertoire en NVM 12 par la copie de celui-ci mise à jour en mémoire RAM à l'étape E418.

Le CPU2 1022 ordonne ensuite la mise à jour de la zone *rollforward* en mémoire NVM 12 (étape E422). Cela consiste par exemple à mettre à jour la zone *rollforward* en mémoire NVM 12 en fonction des données les plus récentes des objets mis à jour successivement en mémoire RAM. Il est à noter que dans un souci d'exhaustivité, les étapes d'écriture E420 et E422 ont été décrites comme deux étapes distinctes. Cependant, dans un contexte dans lequel la mémoire NVM est sous forme de pages mémoires, l'écriture s'effectue en une seule fois, sur la même page mémoire NVM. Dans un tel contexte, l'écriture est considérée comme étant soit réalisée (toutes les données sont écrites) soit non réalisée (aucune données écrites).

Le CPU2 1022 commande ensuite la mise à jour de la version du répertoire dans la mémoire OTP/MTP (étape 430).

Le CPU2 1022 ordonne ensuite la mise à jour des objets en mémoire NVM 12, c'est-à-dire de leurs données (étape E440) conformément à la zone *rollforward* mise à jour à l'étape E422, ainsi que de leur propre version (étape E442).

Il est fait remarquer que, dans l'exemple décrit en référence à la figure 4, la version du répertoire est mise à jour à l'étape E418 après que plusieurs objets Oi aient été modifiés. Ce groupement des modifications permet de limiter le nombre d'écritures en mémoire OTP/MTP (étape E430) et d'en optimiser la durée de vie. En variante, la version du répertoire pourrait être mise à jour en mémoire RAM à chaque écriture dans un objet (étape E418 intégrée à la boucle), seule la dernière version du répertoire étant par la suite inscrite en mémoire OTP/MTP à l'étape E430. Ceci permettrait également de limiter le nombre d'écritures en mémoire OTP/MTP et d'en optimiser la durée de vie.

Dans une dernière étape (E444), le CPU2 1022 efface ensuite le contenu de la zone rollforward en mémoire volatile 1026.

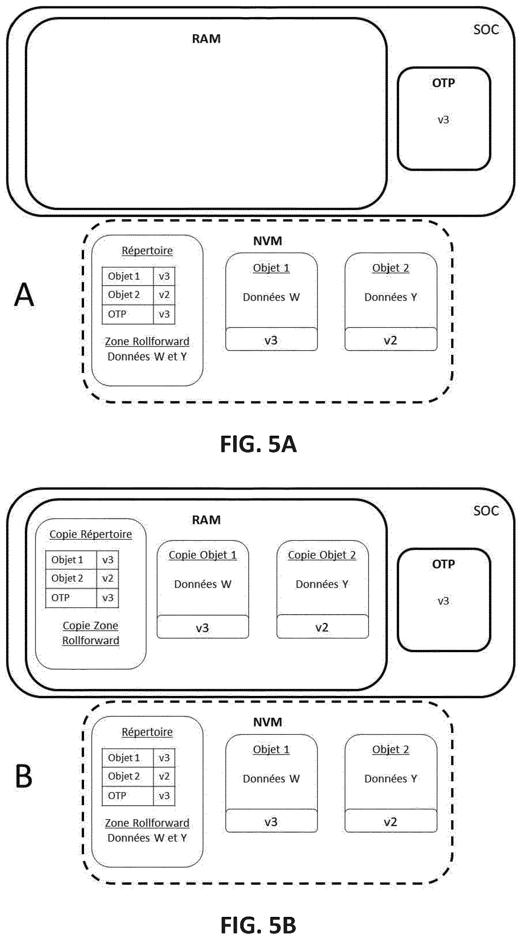

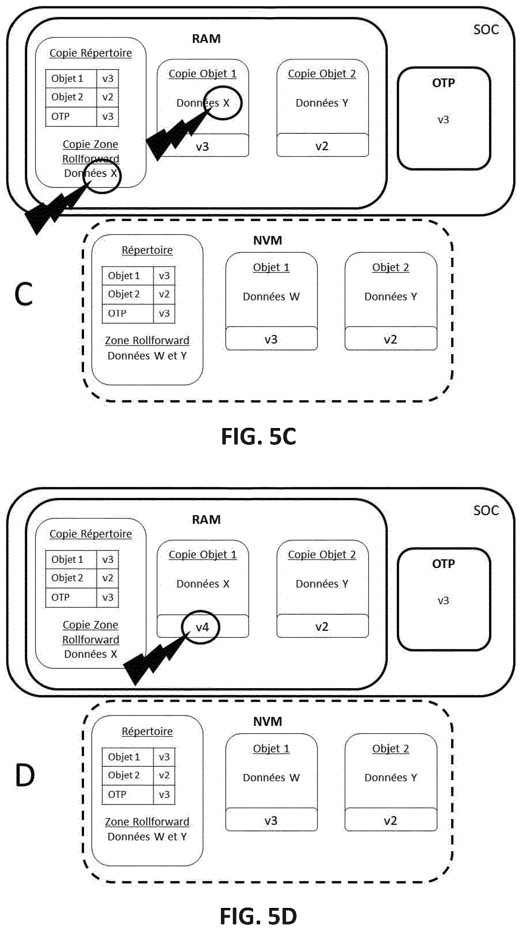

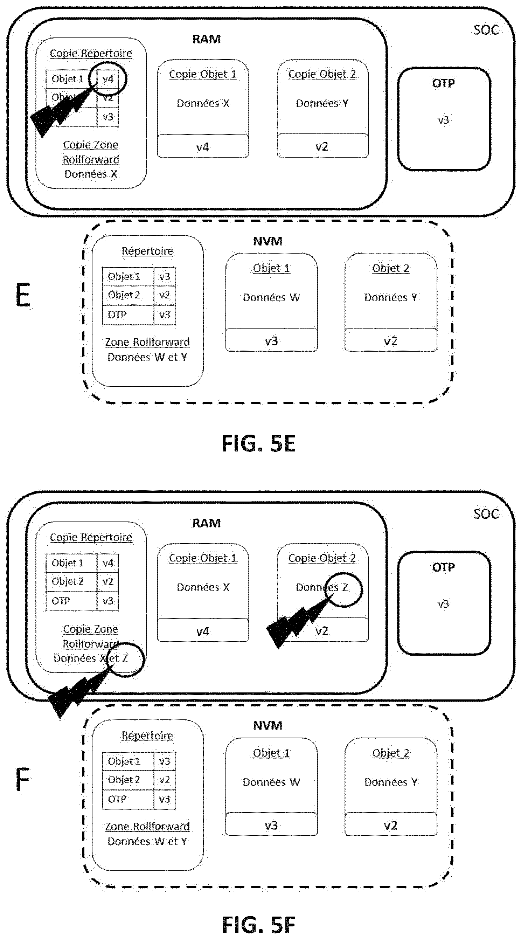

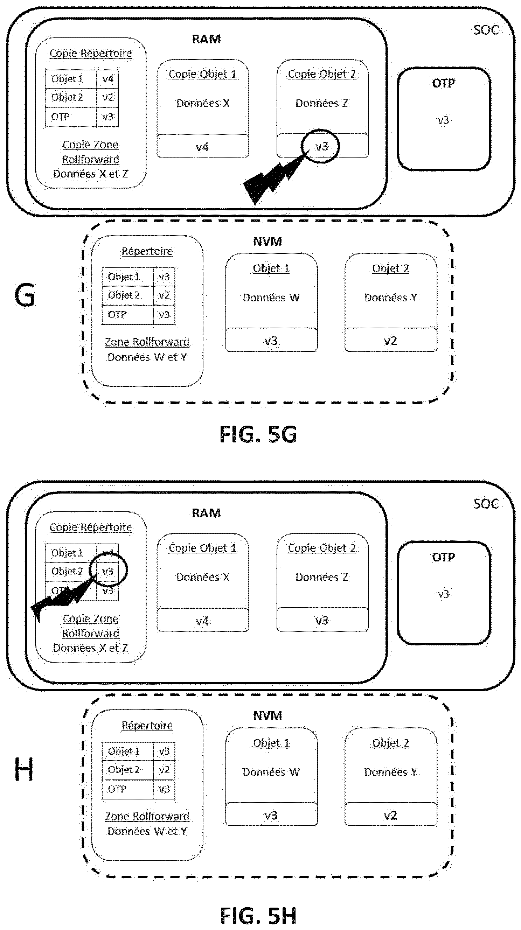

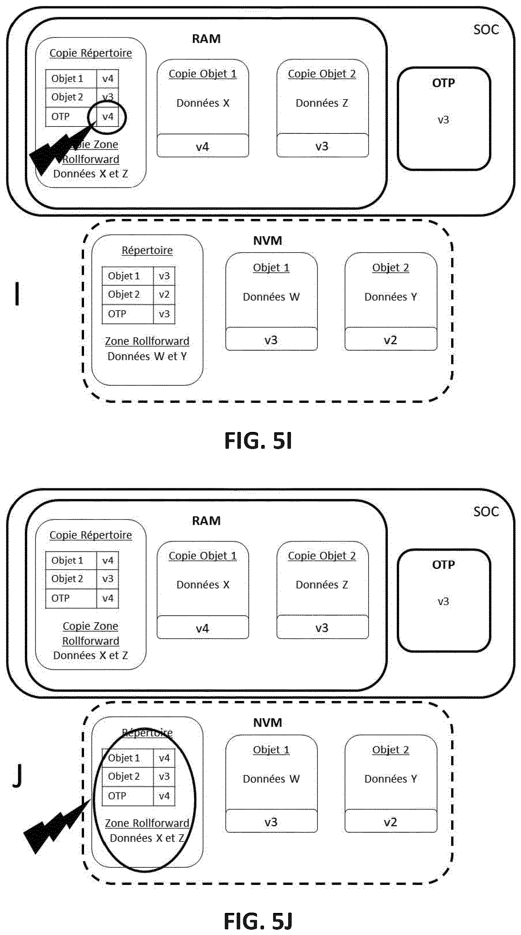

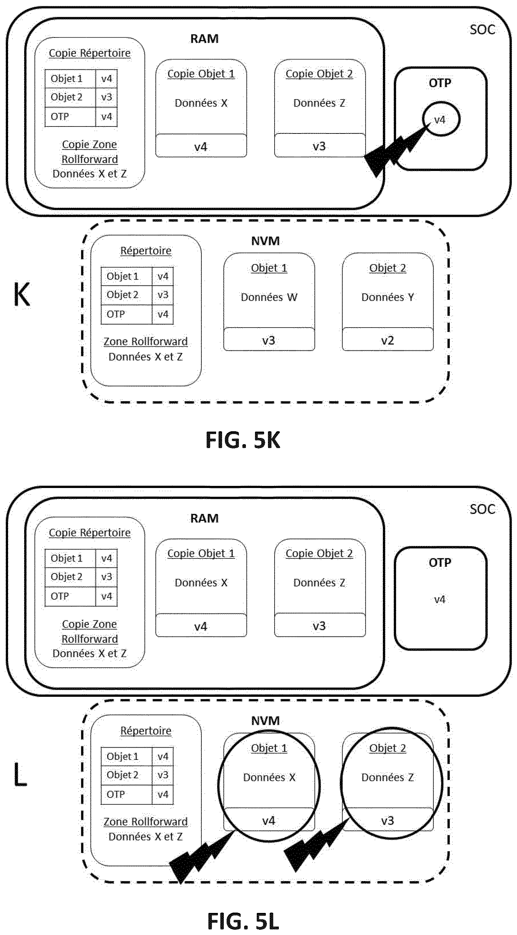

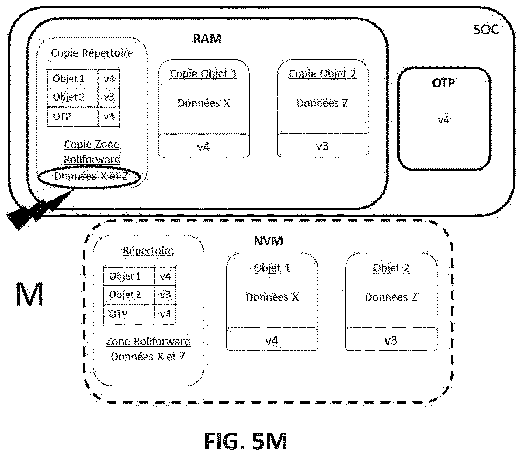

**La** **figure 5** illustre schématiquement l'état successif (A à M) des différentes mémoires considérées (RAM 1026, OTP/MTP 1024, NVM 12) lors de la mise en œuvre des étapes de la figure 4, selon un exemple particulier donné à titre d'illustration uniquement.

Dans cet exemple, à l'allumage du CPU2 1022 (état A, étape E400), la mémoire OTP 1024 contient l'identifiant de la version courante du répertoire dédié, ici 'v3'. La mémoire NVM 12 comprend deux objets : 'Objet 1' et 'Objet 2'. L'objet 1 a une version v3 et contient des données W. L'objet 2 a une version v2 et contient des données Y. La mémoire NVM 12 comprend également un répertoire indiquant la correspondance entre les objets 1 et 2 et leur version respective, ainsi que sa propre version, également stockée dans la mémoire OTP 1024, à savoir 'v3'. La mémoire NVM 12 comprend également une zone *rollforward* qui comprend les données W et Y des objets 1 et 2.

[Fig.5A] Dans cet état A, correspondant au *boot* du CPU2 1022, la mémoire RAM 1026 est vide.

[Fig.5B] L'état B correspond au résultat de la vérification de la « fraicheur » des données (objets, répertoire) déjà présentes en mémoire NVM 12 à l'allumage du CPU2 1022, c'est-à-dire après mise en œuvre des étapes décrites en référence à la figure 2.

A ce stade, la mémoire RAM 1026 comprend une copie du répertoire mentionné précédemment, une copie de l'objet 1, une copie de l'objet 2 ainsi qu'une copie de la zone *rollforward,* dont le contenu a été effacé (étape E30 de la figure 2) à l'issue de la vérification de fraicheur initiale.

[Fig.5C] L'état C illustre l'écriture des données X (en remplacement des données W) dans la copie de l'objet 1 et dans la copie de la zone *rollforward* (étape E410) en mémoire RAM.

[Fig.5D] L'état D illustre la mise à jour de la version de l'objet 1 (v4 au lieu de v3) dans la copie de l'objet 1 en mémoire RAM 1026 (étape E412).

[Fig.5E] L'état E illustre la mise à jour de la version de l'objet 1 (v4 au lieu de v3) dans la copie du répertoire en mémoire RAM 1026 (étape E414).

[Fig.5F] L'état F illustre l'écriture des données Z (en remplacement des données Y) dans la copie de l'objet 2 et dans la copie de la zone *rollforward* (deuxième étape E410) en mémoire RAM.

[Fig.5G] L'état G illustre la mise à jour de la version de l'objet 2 (v3 au lieu de v2) dans la copie de l'objet 2 en mémoire RAM 1026 (deuxième étape E412).

[Fig.5H] L'état H illustre la mise à jour de la version de l'objet 2 (v3 au lieu de v2) dans la copie du répertoire en mémoire RAM 1026 (deuxième étape E414).

[Fig.5I] Tous les objets ayant été traités, la version du répertoire est mise à jour (v4 au lieu de v3) dans la copie du répertoire (étape E418), comme illustré dans l'état I.

Si une coupure d'alimentation *(tearing)* du CPU2 1022 se produit avant l'étape E420, cela a pour effet d'effacer le contenu de la mémoire RAM. Cependant, puisqu'aucune mise à jour de la mémoire NVM ni de la mémoire OTP n'a été effectuée, les versions des objets (v3 pour l'objet 1 et v2 pour l'objet 2) dans le répertoire et dans les objets eux-mêmes concordent et les versions du répertoire (v3) dans le répertoire en NVM et dans la mémoire OTP concordent également. Il est donc aisé de vérifier qu'il ne s'agissait pas d'une attaque par *rollback.* On évite ainsi un faux positif qui indiquerait une mauvaise version uniquement à cause de la coupure de courant, sans pour autant être attribuable à une attaque par *rollback.*

[Fig.5J] L'état J illustre la mise à jour du répertoire en mémoire NVM (étape E420) ainsi que de la zone *rollforward* (étape 422) conformément aux copies modifiées du répertoire et des objets successivement mis à jour dans la copie de la zone *rollforward* en mémoire RAM.

Une coupure d'alimentation *(tearing)* du CPU2 1022 se produisant entre les étapes E422 et E430 a pour effet d'effacer le contenu de la mémoire RAM alors que le répertoire et la zone *rollforward* ont été mis à jour dans la mémoire NVM 12. Cependant, le contenu de la zone *rollforward* (X et Y) diffère de celui des objets en mémoire NVM 12 (W et Z) et puisqu'aucune mise à jour de la mémoire OTP n'a été effectuée, les versions du répertoire en NVM (v4) et dans la mémoire OTP (v3) diffèrent également. Cela indique qu'une coupure de courant est intervenue avant la mise à jour de la mémoire sécurisée OTP ou qu'une attaque par *rollback* a eu lieu, ce qui explique la divergence de contenu et de versions. Afin de vérifier qu'il ne s'agit pas d'une attaque par *rollback,* on peut vérifier si la version du répertoire en NVM est strictement supérieure à celle de la mémoire OTP (voir étape E24).

[Fig.5K] L'état K illustre la mise à jour de la mémoire OTP (v4 au lieu de v3) de l'étape E430. Une coupure d'alimentation *(tearing)* du CPU2 1022 se produisant entre les étapes E430 et E440 a pour effet d'effacer le contenu de la mémoire RAM alors que les objets en mémoire NVM 12 n'ont pas été mis à jour. En revanche, comme le répertoire et la zone *rollforward* ont été mis à jour dans la mémoire NVM 12 et la mémoire OTP a été également mise à jour, il est possible de connaitre de manière fiable le contenu et la version que devrait avoir les objets en mémoire NVM 12. En effet, la correspondance entre les versions du répertoire dans le répertoire en mémoire NVM et dans la mémoire OTP (v4) indique que les versions des objets indiquées dans le répertoire sont les bonnes (les plus « fraiches »), de même que le contenu de la zone *rollforward* est le bon. Il suffit alors de mettre à jour les objets en fonction de ces éléments, qui seront copiés en mémoire RAM pour ce faire (voir étapes E28, E29).

[Fig.5L] L'état L illustre la mise à jour des objets 1 et 2 en mémoire NVM 12, c'est-à-dire de leur contenu conformément au contenu de la zone *rollforward* mise à jour à l'étape E422 : X et Z au lieu de W et Y (étape E440) et de leur version (étape E442).

[Fig.5M] Enfin, l'état M illustre l'effacement du contenu de la zone *rollforward* en RAM (étape E444) une fois le contenu et la version des objets de la NVM mis à jour.

De façon générale, il y a lieu de remarquer que le numéro de version d'un objet donne des informations sur le taux d'usure de certaines zones de la mémoire NVM. Par exemple, un numéro de version élevé indique qu'un objet a été modifié de nombreuses fois. Ces informations permettent notamment une meilleure gestion de la mémoire. Ainsi, une meilleure répartition des écritures dans la mémoire NVM peut être faite afin d'éviter l'usure prématurée d'une zone particulière.

Dans un mode de réalisation, les versions de chaque objet ne sont pas incrémentées par rapport à leur ancienne version comme décrit en référence à l'étape E412 ; on leur affecte plutôt la valeur en OTP/MTP 1024 incrémentée de 1. Avantageusement, ceci permet l'accélération des performances d'un ramasse-miette incrémental permettant d'exécuter des pas d'un cycle en alternance avec l'exécution de l'application. Si on utilise l'abstraction des couleurs introduite par Dijkstra et al [1976,1978] bien connue de l'homme du métier, un objet est :
- blanc s'il n'est jamais rencontré pendant la phase de marquage,
- gris s'il a été rencontré pendant la phase de marquage
- noir s'il a été rencontré pendant la phase de marquage et qu'on a scanné toutes ses références pour aller griser les objets référencés.

Lors de la reprise du marquage, on aura pris soin de repasser en gris tous les objets noirs dont le numéro de version est supérieur au maximum des versions des objets lors du précédent pas de marquage. On évitera donc une barrière en écriture du ramasse-miette incrémental sur les objets lors de l'exécution de l'application (*mutator* en terminologie anglo-saxonne).

Les exemples qui précèdent ne sont que des modes de réalisation de l'invention. Par exemple, par souci de simplification, la description concerne principalement les systèmes orientés objet. Toutefois, elle pourrait s'appliquer à un système de nature différente.

## Revendications

1. Système sur puce (10) comprenant un élément sécurisé (102) comprenant une unité de traitement (1022) configurée pour exécuter un système d'exploitation sécurisé et pour envoyer des instructions à une mémoire non volatile réinscriptible (12) extérieure au système sur puce et relié à celui-ci, l'élément sécurisé (102) comprenant en outre une mémoire non volatile sécurisée (1024) ainsi qu'une mémoire volatile sécurisée (1026), le système sur puce (10) étant **caractérisé en ce que** l'unité de traitement (1022) est configurée pour commander :
- le stockage, dans la mémoire non volatile réinscriptible extérieure (12) d'au moins un objet ayant une version courante, et d'un répertoire dédié associant un identifiant de chaque objet à un identifiant de la version courante de cet objet, le répertoire dédié comprenant en outre un identifiant de sa propre version courante ; et
- le stockage, dans la mémoire non volatile (1024) de l'élément sécurisé, de l'identifiant de la version courante du répertoire dédié.

2. Système sur puce (10) selon la revendication 1, dans lequel l'unité de traitement (1022) est configurée pour commander l'écriture, dans une zone de type « *rollforward »* dans la mémoire non volatile réinscriptible extérieure (12), de données à utiliser pour mettre à jour un objet.

3. Système sur puce (10) selon la revendication 2, dans lequel l'unité de traitement (1022) est configurée pour commander la création d'une copie d'au moins une partie du contenu de la mémoire non volatile réinscriptible extérieure (12) dans la mémoire volatile sécurisée (1026) de l'élément sécurisé.

4. Système sur puce (10) selon la revendication 3, dans lequel l'unité de traitement (1022) est configurée pour commander la modification de ladite copie dans la mémoire volatile sécurisée (1026) de l'élément sécurisé avant la modification de la mémoire non volatile réinscriptible extérieure (12).

5. Système sur puce (10) selon la revendication 4, dans lequel l'unité de traitement (1022) est configurée pour commander:
- la reproduction des modifications effectuées sur une copie du répertoire dédié et de la zone de type *« rollforward »* en mémoire volatile sécurisée (1026) sur le répertoire dédié et la zone de type « *rollforward* » stockés dans la mémoire non volatile réinscriptible extérieure (12), puis
- la modification du ou des objets concernés stockés dans la mémoire non volatile réinscriptible extérieure (12) conformément au contenu de la zone de type « *rollforward »* et du répertoire dédié.

6. Système sur puce (10) selon la revendication 5, dans lequel l'unité de traitement (1022) est configurée pour commander la mise à jour de l'identifiant de la version courante du répertoire dédié dans la mémoire non volatile sécurisée (1024) de l'élément sécurisé avant la modification du ou des objets concernés stockés dans la mémoire non volatile réinscriptible extérieure (12) conformément au contenu de la zone de type « *rollforward »* et du répertoire dédié.

7. Système sur puce (10) selon la revendication 5, dans lequel l'unité de traitement (1022) est configurée pour commander la reproduction des modifications en mémoire non volatile réinscriptible extérieure (12), après que plusieurs copies d'objets aient été modifiées dans la mémoire volatile sécurisée (1026) de l'élément sécurisé.

8. Système sur puce (10) selon l'une quelconque des revendications précédentes, dans lequel la mémoire non volatile sécurisée de l'élément sécurisé est une mémoire à durée de vie limitée de type OTP ou MTP.

9. Système sur puce (10) selon l'une quelconque des revendications précédentes, dans lequel l'identifiant de la version courante d'un objet et/ou l'identifiant de la version courante du répertoire dédié est un numéro de version.

10. Système sur puce (10) selon l'une quelconque des revendications précédentes, dans lequel l'identifiant de la version courante d'un objet et/ou l'identifiant de la version courante du répertoire dédié est une signature ou une somme de contrôle calculée à partir de l'objet et/ou du répertoire dédié, identifiant de manière unique sa version.

11. Système sur puce (10) selon l'une quelconque des revendications 1 à 9, dans lequel l'identifiant de la version courante d'un objet et l'identifiant de la version courante du répertoire dédié sont des numéros de version, dans lequel l'unité de traitement (1022) met en œuvre une première fonction de comparaison et une deuxième fonction de comparaison afin de déterminer si un identifiant de version correspond à une version courante ou à une ancienne version, la première fonction consistant à déterminer si les valeurs sont identiques, la seconde fonction consistant à déterminer si ladite version est strictement supérieure ou strictement inférieure à la version courante.

12. Système sur puce (10) selon l'une quelconque des revendications précédentes, dans lequel l'unité de traitement (1022) est configurée pour fonctionner tantôt selon un mode d'exécution non sécurisé tantôt selon un mode d'exécution sécurisé.

13. Système sur puce (10) selon l'une quelconque des revendications précédentes, dans lequel l'unité de traitement (1022) est configurée pour commander un contrôleur (101) de mémoire contrôlant la mémoire non volatile réinscriptible extérieure (12).

14. Procédé d'écriture sécurisée d'un objet dans une mémoire non volatile réinscriptible (12) extérieure à un système sur puce (10) et reliée à celui-ci, le système sur puce (10) comprenant un élément sécurisé (102) comprenant une unité de traitement (1022) configurée pour exécuter un système d'exploitation sécurisé et pour envoyer des instructions à la mémoire non volatile réinscriptible extérieure (12), l'élément sécurisé (102) comprenant en outre une mémoire non volatile sécurisée (1024) ainsi qu'une mémoire volatile sécurisée (1026), le procédé étant **caractérisé en ce qu'**il comprend les étapes suivantes :
- commande de l'écriture (E420) d'un identifiant de la version courante de l'objet dans un répertoire dédié stocké dans la mémoire non volatile réinscriptible extérieure (12), en association avec un identifiant de l'objet,
- commande de la mise à jour (E420) d'un identifiant de la version courante du répertoire dédié dans le répertoire dédié stocké dans la mémoire non volatile réinscriptible extérieure (12),
- commande de l'écriture (E430) de l'identifiant de la version courante du répertoire dédié dans la mémoire non volatile sécurisée (1024) de l'élément sécurisé.

15. Procédé selon la revendication 14, comprenant une étape de vérification de la fraicheur d'un objet stocké dans la mémoire non volatile réinscriptible extérieure (12), comprenant :
- la création (E22) d'une copie du répertoire dédié et de l'objet dans la mémoire volatile sécurisée (1026) de l'élément sécurisé,
- la comparaison (E24) de l'identifiant de la version courante du répertoire dédié stocké dans la copie du répertoire dédiée, avec l'identifiant de la version courante du répertoire dédié stocké dans la mémoire non volatile sécurisée (1024) de l'élément sécurisé ;
- en cas d'égalité, la comparaison (E28) de l'identifiant de la version courante de la copie de l'objet avec l'identifiant de la version de cet objet stocké dans la copie du répertoire dédié, afin de vérifier la fraicheur de l'objet.

16. Procédé selon la revendication 14 ou 15, mis en œuvre au démarrage (E20) de l'unité de traitement (1022) de l'élément sécurisé (102).

17. Procédé selon l'une quelconque des revendications 14 à 16, dans lequel l'identifiant de la version courante d'un objet et/ou l'identifiant de la version courante du répertoire dédié est un numéro de version.

18. Procédé selon l'une quelconque des revendications 14 à 17, dans lequel l'identifiant de la version courante d'un objet et/ou l'identifiant de la version courante du répertoire dédié est une signature ou une somme de contrôle calculée à partir de l'objet et/ou du répertoire dédié, identifiant de manière unique sa version.

19. Procédé selon l'une quelconque des revendications 14 à 18, comprenant en outre une étape d'écriture, dans une zone de type « *rollforward* » dans la mémoire non volatile réinscriptible extérieure (12), de données à utiliser pour mettre à jour un objet.

20. Procédé selon l'une quelconque des revendications 14 à 19, dans lequel l'identifiant de la version courante d'un objet et l'identifiant de la version courante du répertoire dédié sont des numéros de version, dans lequel une première fonction de comparaison et une deuxième fonction de comparaison sont mises en œuvre afin de déterminer si un identifiant de version correspond à une version courante ou à une ancienne version, la première fonction consistant à déterminer si les valeurs sont identiques, la seconde fonction consistant à déterminer si ladite version est strictement supérieure ou strictement inférieure à la version courante.

21. Procédé selon la revendications 15, comprenant une étape de mise à jour (E26) de la version et/ou du contenu dudit objet en cas de différence détectée lors de ladite comparaison (E29) de l'identifiant de la version courante de la copie de l'objet avec l'identifiant de la version de cet objet stocké dans la copie du répertoire dédié.

## Patentansprüche

1. System-on-Chip (10), umfassend ein sicheres Element (102), das eine Verarbeitungseinheit (1022) umfasst, die so konfiguriert ist, dass sie ein sicheres Betriebssystem ausführt und Befehle an einen wiederbeschreibbaren nichtflüchtigen Speicher (12) sendet, der außerhalb des System-on-Chip liegt und mit diesem verbunden ist, wobei das sichere Element (102) ferner einen sicheren nichtflüchtigen Speicher (1024) sowie einen sicheren flüchtigen Speicher (1026) umfasst, wobei das System-on-Chip (10) **dadurch gekennzeichnet ist, dass** die Verarbeitungseinheit (1022) so konfiguriert ist, dass sie Folgendes anweist:
- die Speicherung mindestens eines Objekts, aufweisend eine aktuelle Version, und eines dedizierten Verzeichnisses, das eine Kennung jedes Objekts einer Kennung der aktuellen Version dieses Objekts zuordnet, in dem externen wiederbeschreibbaren nichtflüchtigen Speicher (12), wobei das dedizierte Verzeichnis außerdem eine Kennung seiner eigenen aktuellen Version umfasst; und
- die Speicherung der Kennung der aktuellen Version des dedizierten Verzeichnisses in dem nichtflüchtigen Speicher (1024) des sicheren Elements.

2. System-on-Chip (10) nach Anspruch 1, wobei die Verarbeitungseinheit (1022) so konfiguriert ist, dass sie das Schreiben von Daten, die zur Aktualisierung eines Objekts verwendet werden sollen, in einen Bereich vom Typ *"Rollforward"* in dem externen wiederbeschreibbaren nichtflüchtigen Speicher (12) anweist.

3. System-on-Chip (10) nach Anspruch 2, wobei die Verarbeitungseinheit (1022) so konfiguriert ist, dass sie die Erstellung einer Kopie mindestens eines Teils des Inhalts des externen wiederbeschreibbaren nichtflüchtigen Speichers (12) in dem sicheren flüchtigen Speicher (1026) des sicheren Elements anweist.

4. System-on-Chip (10) nach Anspruch 3, wobei die Verarbeitungseinheit (1022) so konfiguriert ist, dass sie die Änderung der Kopie in dem sicheren flüchtigen Speicher (1026) des sicheren Elements vor der Änderung des externen wiederbeschreibbaren nichtflüchtigen Speichers (12) anweist.

5. System-on-Chip (10) nach Anspruch 4, wobei die Verarbeitungseinheit (1022) so konfiguriert ist, dass sie Folgendes anweist:
- die Reproduktion der an einer Kopie des dedizierten Verzeichnisses und des Bereichs vom Typ *"Rollforward"* in dem sicheren flüchtigen Speicher (1026) vorgenommenen Änderungen in das dedizierte Verzeichnis und den Bereich vom Typ *"Rollforward",* die in dem externen wiederbeschreibbaren nichtflüchtigen Speicher (12) gespeichert sind, und anschließend
- die Änderung des oder der betroffenen Objekte, die in dem externen wiederbeschreibbaren nichtflüchtigen Speicher (12) gespeichert sind, gemäß dem Inhalt des Bereichs vom Typ *"Rollforward"* und des dedizierten Verzeichnisses.

6. System-on-Chip (10) nach Anspruch 5, wobei die Verarbeitungseinheit (1022) so konfiguriert ist, dass sie die Aktualisierung der Kennung der aktuellen Version des dedizierten Verzeichnisses in dem sicheren nichtflüchtigen Speicher (1024) des sicheren Elements vor der Änderung des oder der betroffenen Objekte, die in dem externen wiederbeschreibbaren nichtflüchtigen Speicher (12) gespeichert sind, gemäß dem Inhalt des Bereichs vom Typ *"Rollforward"* und des dedizierten Verzeichnisses anweist.

7. System-on-Chip (10) nach Anspruch 5, wobei die Verarbeitungseinheit (1022) so konfiguriert ist, dass sie die Reproduktion der Änderungen in dem externen wiederbeschreibbaren nichtflüchtigen Speicher (12) anweist, nachdem mehrere Kopien von Objekten in dem sicheren flüchtigen Speicher (1026) des sicheren Elements geändert wurden.

8. System-on-Chip (10) nach einem der vorhergehenden Ansprüche, wobei der sichere nichtflüchtige Speicher des sicheren Elements ein OTP- oder MTP-Speicher mit begrenzter Lebensdauer ist.

9. System-on-Chip (10) nach einem der vorhergehenden Ansprüche, wobei die Kennung der aktuellen Version eines Objekts und/oder die Kennung der aktuellen Version des dedizierten Verzeichnisses eine Versionsnummer ist.

10. System-on-Chip (10) nach einem der vorhergehenden Ansprüche, wobei die Kennung der aktuellen Version eines Objekts und/oder die Kennung der aktuellen Version des dedizierten Verzeichnisses eine Signatur oder eine aus dem Objekt und/oder dem dedizierten Verzeichnis berechnete Prüfsumme ist, die dessen Version eindeutig zu erkennen gibt.

11. System-on-Chip (10) nach einem der Ansprüche 1 bis 9, wobei die Kennung der aktuellen Version eines Objekts und die Kennung der aktuellen Version des dedizierten Verzeichnisses Versionsnummern sind, wobei die Verarbeitungseinheit (1022) eine erste Vergleichsfunktion und eine zweite Vergleichsfunktion ausführt, um zu bestimmen, ob eine Versionskennung einer aktuellen Version oder einer älteren Version entspricht, wobei die erste Funktion darin besteht, zu bestimmen, ob die Werte identisch sind, und die zweite Funktion darin besteht, zu bestimmen, ob die Version streng größer oder streng kleiner als die aktuelle Version ist.

12. System-on-Chip (10) nach einem der vorhergehenden Ansprüche, wobei die Verarbeitungseinheit (1022) so konfiguriert ist, dass sie entweder in einem unsicheren Ausführungsmodus oder in einem sicheren Ausführungsmodus arbeitet.

13. System-on-Chip (10) nach einem der vorhergehenden Ansprüche, wobei die Verarbeitungseinheit (1022) so konfiguriert ist, dass sie Anweisungen an eine Speichersteuerung (101) ausgibt, die den externen wiederbeschreibbaren nichtflüchtigen Speicher (12) steuert.

14. Verfahren zum sicheren Schreiben eines Objekts in einen wiederbeschreibbaren nichtflüchtigen Speicher (12), der außerhalb eines System-on-Chip (10) liegt und mit diesem verbunden ist, wobei das System-on-Chip (10) ein sicheres Element (102) umfasst, das eine Verarbeitungseinheit (1022) umfasst, die so konfiguriert ist, dass sie ein sicheres Betriebssystem ausführt und Befehle an den externen wiederbeschreibbaren nichtflüchtigen Speicher (12) sendet, wobei das sichere Element (102) ferner einen sicheren nichtflüchtigen Speicher (1024) sowie einen sicheren flüchtigen Speicher (1026) umfasst, wobei das Verfahren **dadurch gekennzeichnet ist, dass** es die folgenden Schritte umfasst:
- Anweisung zum Schreiben (E420) einer Kennung der aktuellen Version des Objekts in ein dediziertes Verzeichnis, das in dem externen wiederbeschreibbaren nichtflüchtigen Speicher (12) gespeichert ist, in Verbindung mit einer Kennung des Objekts,
- Anweisung zum Aktualisieren (E420) einer Kennung der aktuellen Version des dedizierten Verzeichnisses in dem dedizierten Verzeichnis, das in dem externen wiederbeschreibbaren nichtflüchtigen Speicher (12) gespeichert ist,
- Anweisung zum Schreiben (E430) der Kennung der aktuellen Version des dedizierten Verzeichnisses in den sicheren nichtflüchtigen Speicher (1024) des sicheren Elements.

15. Verfahren nach Anspruch 14, umfassend einen Schritt zum Überprüfen der Aktualität eines in dem externen wiederbeschreibbaren nichtflüchtigen Speicher (12) gespeicherten Objekts, umfassend:
- die Erstellung (E22) einer Kopie des dedizierten Verzeichnisses und des Objekts in dem sicheren flüchtigen Speicher (1026) des sicheren Elements,
- das Vergleichen (E24) der Kennung der aktuellen Version des dedizierten Verzeichnisses, das in der Kopie des dedizierten Verzeichnisses gespeichert ist, mit der Kennung der aktuellen Version des dedizierten Verzeichnisses, das in dem sicheren nichtflüchtigen Speicher (1024) des sicheren Elements gespeichert ist;
- bei Übereinstimmung Vergleich (E28) der Kennung der aktuellen Version der Kopie des Objekts mit der Kennung der Version dieses Objekts, das in der Kopie des dedizierten Verzeichnisses gespeichert ist, um die Aktualität des Objekts zu überprüfen.

16. Verfahren nach Anspruch 14 oder 15, das beim Start (E20) der Verarbeitungseinheit (1022) des sicheren Elements (102) ausgeführt wird.

17. Verfahren nach einem der Ansprüche 14 bis 16, wobei die Kennung der aktuellen Version eines Objekts und/oder die Kennung der aktuellen Version des dedizierten Verzeichnisses eine Versionsnummer ist.

18. Verfahren nach einem der Ansprüche 14 bis 17, wobei die Kennung der aktuellen Version eines Objekts und/oder die Kennung der aktuellen Version des dedizierten Verzeichnisses eine Signatur oder eine aus dem Objekt und/oder dem dedizierten Verzeichnis berechnete Prüfsumme ist, die dessen Version eindeutig zu erkennen gibt.

19. Verfahren nach einem der Ansprüche 14 bis 18, das ferner einen Schritt umfasst, bei dem Daten, die zur Aktualisierung eines Objekts verwendet werden sollen, in einen Bereich vom Typ *"Rollforward"* in dem externen wiederbeschreibbaren nichtflüchtigen Speicher (12) geschrieben werden.

20. Verfahren nach einem der Ansprüche 14 bis 19, wobei die Kennung der aktuellen Version eines Objekts und die Kennung der aktuellen Version des dedizierten Verzeichnisses Versionsnummern sind, wobei eine erste Vergleichsfunktion und eine zweite Vergleichsfunktion ausgeführt werden, um zu bestimmen, ob eine Versionskennung einer aktuellen Version oder einer älteren Version entspricht, wobei die erste Funktion darin besteht, zu bestimmen, ob die Werte identisch sind, und die zweite Funktion darin besteht, zu bestimmen, ob die Version streng größer oder streng kleiner als die aktuelle Version ist.

21. Verfahren nach Anspruch 15, umfassend einen Schritt zum Aktualisieren (E26) der Version und/oder des Inhalts des Objekts, wenn bei dem Vergleich (E29) der Kennung der aktuellen Version der Kopie des Objekts mit der Kennung der Version dieses Objekts, die in der Kopie des dedizierten Verzeichnisses gespeichert ist, ein Unterschied festgestellt wird.

## Claims

1. System on a chip (10) comprising a secure element (102) comprising a processing unit (1022) configured to execute a secure operating system and to send instructions to a rewritable non-volatile memory (12) which is external to the system on a chip and connected to it, the secure element (102) further comprising a secure non-volatile memory (1024) as well as a secure volatile memory (1026), the system on a chip (10) being **characterized in that** the processing unit (1022) is configured to control:
- the storage, in the external rewritable non-volatile memory (12), of at least one object having a current version, and of a dedicated directory associating an identifier of each object with an identifier of the current version of this object, the dedicated directory further comprising an identifier of its own current version; and
- the storage, in the non-volatile memory (1024) of the secure element, of the identifier of the current version of the dedicated directory.

2. System on a chip (10) according to Claim 1, wherein the processing unit (1022) is configured to control the writing, to a *roll-forward* area in the external rewritable non-volatile memory (12), of data to be used to update an object.

3. System on a chip (10) according to Claim 2, wherein the processing unit (1022) is configured to control the creation of a copy of at least a portion of the contents of the external rewritable non-volatile memory (12) in the secure volatile memory (1026) of the secure element.

4. System on a chip (10) according to Claim 3, wherein the processing unit (1022) is configured to control the modification of said copy in the secure volatile memory (1026) of the secure element before the external rewritable non-volatile memory (12) is modified.

5. System on a chip (10) according to Claim 4, wherein the processing unit (1022) is configured to control:
- the reproduction of the modifications carried out on a copy of the dedicated directory and of the *roll-forward* area in the secure volatile memory (1026) on the dedicated directory and the *roll-forward* area which are stored in the external rewritable non-volatile memory (12), then
- the modification of the one or more relevant objects concerned stored in the external rewritable non-volatile memory (12) in accordance with the contents of the *roll-forward* area and of the dedicated directory.

6. System on a chip (10) according to Claim 5, wherein the processing unit (1022) is configured to control the updating of the identifier of the current version of the dedicated directory in the secure non-volatile memory (1024) of the secure element before the one or more relevant objects stored in the external rewritable non-volatile memory (12) are modified in accordance with the contents of the *roll-forward* area and of the dedicated directory.

7. System on a chip (10) according to Claim 5, wherein the processing unit (1022) is configured to control the reproduction of the modifications in the external rewritable non-volatile memory (12) after several copies of objects have been modified in the secure volatile memory (1026) of the secure element.

8. System on a chip (10) according to any one of the preceding claims, wherein the secure non-volatile memory of the secure element is an OTP or MTP memory with a limited lifetime.

9. System on a chip (10) according to any one of the preceding claims, wherein the identifier of the current version of an object and/or the identifier of the current version of the dedicated directory is a version number.

10. System on a chip (10) according to any one of the preceding claims, wherein the identifier of the current version of an object and/or the identifier of the current version of the dedicated directory is a signature or a checksum calculated on the basis of the object and/or of the dedicated directory, uniquely identifying its version.

11. System on a chip (10) according to any one of Claims 1 to 9, wherein the identifier of the current version of an object and the identifier of the current version of the dedicated directory are version numbers, wherein the processing unit (1022) implements a first comparison function and a second comparison function in order to determine whether a version identifier corresponds to a current version or an old version, the first function consisting in determining whether the values are identical, the second function consisting in determining whether said version is strictly higher or strictly lower than the current version.

12. System on a chip (10) according to any one of the preceding claims, wherein the processing unit (1022) is configured to operate at times in a non-secure execution mode and at times in a secure execution mode.

13. System on a chip (10) according to any one of the preceding claims, wherein the processing unit (1022) is configured to control a memory controller (101) controlling the external rewritable non-volatile memory (12).

14. Method for securely writing an object to a rewritable non-volatile memory (12) which is external to a system on a chip (10) and connected to it, the system on a chip (10) comprising a secure element (102) comprising a processing unit (1022) configured to execute a secure operating system and to send instructions to the external rewritable non-volatile memory (12), the secure element (102) further comprising a secure non-volatile memory (1024) as well as a secure volatile memory (1026), the method being **characterized in that** it comprises the following steps:
- controlling the writing (E420) of an identifier of the current version of the object in a dedicated directory stored in the external rewritable non-volatile memory (12), in association with an identifier of the object,
- controlling the updating (E420) of an identifier of the current version of the dedicated directory in the dedicated directory stored in the external rewritable non-volatile memory (12),
- controlling the writing (E430) of the identifier of the current version of the dedicated directory in the secure non-volatile memory (1024) of the secure element.

15. Method according to Claim 14, including a step of verifying the freshness of an object stored in the external rewritable non-volatile memory (12), comprising:
- creating (E22) a copy of the dedicated directory and of the object in the secure volatile memory (1026) of the secure element,
- comparing (E24) the identifier of the current version of the dedicated directory stored in the copy of the dedicated directory with the identifier of the current version of the dedicated directory stored in the secure non-volatile memory (1024) of the secure element;
- in the event of equality, comparing (E28) the identifier of the current version of the copy of the object with the identifier of the version of this object stored in the copy of the dedicated directory, in order to verify the freshness of the object.

16. Method according to Claim 14 or 15, implemented at the startup (E20) of the processing unit (1022) of the secure element (102).

17. Method according to any one of Claims 14 to 16, wherein the identifier of the current version of an object and/or the identifier of the current version of the dedicated directory is a version number.

18. Method according to any one of Claims 14 to 17, wherein the identifier of the current version of an object and/or the identifier of the current version of the dedicated directory is a signature or checksum calculated on the basis of the object and/or of the dedicated directory, uniquely identifying its version.

19. Method according to any one of Claims 14 to 18, further comprising a step of writing, to a *roll-forward* area in the external rewritable non-volatile memory (12), data to be used to update an object.

20. Method according to any one of Claims 14 to 19, wherein the identifier of the current version of an object and the identifier of the current version of the dedicated directory are version numbers, wherein a first comparison function and a second comparison function are implemented in order to determine whether a version identifier corresponds to a current version or to an old version, the first function consisting in determining whether the values are identical, the second function consisting in determining whether said version is strictly higher or strictly lower than the current version.

21. Method according to Claim 15, comprising a step of updating (E26) the version and/or the contents of said object in the event of a difference detected during said comparison (E29) of the identifier of the current version of the copy of the object with the identifier of the version of this object stored in the copy of the dedicated directory.
